# DEMANDE DE BREVET EUROPEEN

(11) **EP 0 876 757 A1**
(43) Date de publication de la demande: **11.11.1998**
(21) Numéro de dépôt: 98440085.3
(22) Date de dépôt: 06.05.1998
(51) Int. Cl.: A01G 17/14

(54) **Dispositif prolongateur d'un piquet de vigne**

(30) Priorité: 07.05.1997 FR 9705793
(71) Demandeur: Société Nouvelle Vagner Prugnat Ayant pour Sigle S.N.V.P., S.A.R.L., 51270 Orbais l'Abbaye (FR)
(72) Inventeur: Casters, Denis, 51270 Mareuil en Brie (FR)
(74) Mandataire: Rhein, Alain

(57) **Abrégé**

L'invention a trait à un dispositif prolongateur (3) d'un piquet de vigne (1) en vue d'augmenter la surface foliaire pendant la croissance de la végétation et avant la maturation des grappes de raison.

Ce dispositif prolongateur (3) est caractérisé par le fait qu'il est constitué par un corps allongé (4) comportant, dans sa partie inférieure (5), des moyens de fixation (6) en vue de le rendre solidaire de la partie supérieure (7) du piquet de vigne (1), ce corps allongé (4) recevant, en outre, notamment à son extrémité supérieure (8), des moyens de fixation et/ou de maintien (9) de fils de palissage (2).

## Description

L'invention concerne un dispositif prolongateur d'un piquet de vigne en vue d'augmenter la surface foliaire pendant la croissance de la végétation et avant la maturation des grappes de raisin.

La présente invention trouvera son application dans le domaine vinicole et du travail de la vigne, plus particulièrement, lorsqu'il s'agit de procéder au relevage de la vigne afin d'augmenter la surface foliaire.

Ainsi, lors de la croissance des sarments et du développement de la végétation, il arrive un moment où les feuilles de vignes forment un écran empêchant les rayons de soleil de parvenir aux feuilles situées derrière cet écran. Il en résulte une diminution notable de l'activité de photosynthèse au niveau des feuilles occultées mais également une diminution de la circulation de la sève ce qui se traduit par un ralentissement de la croissance de la vigne. De surcroît, les grains formant les grappes de raisin généralement situés à l'arrière de cet écran, auront beaucoup de difficultés à mûrir et à atteindre un stade de maturation optimal.

Aussi, afin de réduire la portée d'un tel écran, une solution consiste à procéder au relevage de la vigne en vue d'augmenter la surface foliaire pendant la croissance de la végétation mais également de favoriser la maturation des grappes de raisin.

On connaît plusieurs dispositifs susceptibles de permettre une telle opération. Ces dispositifs agissent sur des fils de palissage sur lesquels sont fixés les sarments de vignes de manière à les remonter et à les maintenir dans une position plus haute par rapport au sol.

A cet effet, on connaît au travers du document FR-2.592.757 une glissière à rouleau pour relevage et l'accolage de toute culture sur fil. Un tel dispositif se présente sous la forme de deux fils de fer tendus entre deux piquets successifs, lesdits fils de fer étant susceptibles de coulisser le long de ces piquets dans un mouvement ascendant entraînant les sarments de vignes lesquels pendent par-dessus ces fils.

Un tel dispositif présente un certain nombre d'inconvénients consistant, principalement, à limiter le relevage des sarments à une hauteur correspondant au maximum à celle du piquet.

Il est également connu des écarteurs destinés à être rendus solidaires de l'extrémité supérieure d'un piquet de vigne. Ces écarteurs se présentant sous la forme d'un fil métallique comportent deux branches disposées symétriquement par rapport audit piquet et de manière à former un dièdre ouvert vers le haut. Chaque branche comporte, sensiblement à son extrémité, une boucle destinée au passage d'un fil de palissage par-dessus lequel pendent les sarments de vignes. Le relevage de la vigne consiste, dans ce cas, à rapprocher lesdites boucles et à les maintenir dans cette position par fixation notamment au moyen d'agrafes. Cette opération est, dans la plupart des cas, effectuée manuellement, elle est fastidieuse et très contraignante. Une solution consiste, cependant, à effectuer un tel relevage de manière automatisée au moyen d'une machine ce qui permet de rendre la tâche moins ingrate mais se traduit, par contre, par une destruction importante du feuillage.

De toute manière, on observera que la hauteur de relevage de la vigne obtenue grâce à ces écarteurs est limitée à la longueur des branches qui le définissent.

La présente invention se veut à même de répondre aux inconvénients précités au travers d'un dispositif de conception particulièrement simple et de mise en oeuvre aisée.

A cet effet, l'invention concerne un dispositif prolongateur d'un piquet de vigne en vue d'augmenter la surface foliaire pendant la croissance de la végétation et avant la maturation des grappes de raisin, caractérisé par le fait qu'il est constitué par un corps allongé comportant, dans sa partie inférieure, des moyens de fixation en vue de le rendre solidaire de la partie supérieure dudit piquet de vigne, ce corps allongé recevant, en outre, notamment à son extrémité supérieure, des moyens de fixation et/ou de maintien de fils de palissage.

Les avantages découlant de la présente invention consistent en ce qu'il est possible, à partir d'un piquet de vigne existant en le complétant par ledit dispositif prolongateur, de rehausser les fils de palissage donc de rehausser la végétation et, par conséquent, d'augmenter la surface foliaire sans que celle-ci ne crée pour autant un écran aux rayons du soleil.

Le fait de procéder à un tel rehaussement facilite également le passage des engins destinés à l'entretien de la vigne et, ultérieurement, aux vendanges. En outre, le relevage de la végétation permet, avantageusement, de faciliter l'administration et la pénétration des produits nécessaires au traitement de la vigne mais également de préparer cette dernière à la taille des feuilles.

Un tel dispositif prolongateur peut adopter différents modes de réalisation de manière à être à même de prolonger des piquets de vignes dont la nature et/ou la forme sont différentes. Plus particulièrement, de tels piquets peuvent être réalisés en bois, en métal ou autre et être conformés, par exemple, en cornière, en profilé, ce dernier pouvant adopter une forme complexe.

Ainsi, à chaque type de piquet correspond un type de prolongateur comportant des moyens de fixation susceptibles de le rendre solidaire dudit piquet. La forme particulière de ce dispositif prolongateur impose également des moyens de fixation et/ou de maintien de fils de palissage d'une forme qui lui est également adaptée. Ces derniers moyens se présentent avantageusement sous la forme d'un fil métallique définissant au moins un berceau pour la réception d'un fil de palissage. On observera que ce fil métallique est rendu solidaire du corps allongé par l'intermédiaire de moyens de raccordement spécialement adaptés à ce dernier.

De tels berceaux adoptent avantageusement une forme permettant de ne pas endommager les fils de palissage.

La présente invention sera mieux comprise à la lecture de la description qui va suivre se rapportant au dessin joint en annexe dans lequel
- la figure 1 est une représentation schématisée et en éclaté d'un dispositif prolongateur d'un piquet de vigne de forme tubulaire dans lequel ledit dispositif vient s'emboîter ;
- la figure 2 est une vue analogue à la précédente correspondant à un dispositif prolongateur destiné à être rendu solidaire d'un piquet de vigne en bois ;
- la figure 3 est une vue schématisée et en détail d'un piquet en bois illustré dans la figure 2 sur lequel est rapporté un tel dispositif prolongateur ;
- la figure 4 est une représentation schématisée et en éclaté correspondant à un autre mode de réalisation d'un dispositif prolongateur sous la forme d'une tige destinée à être rendue solidaire d'un piquet de vigne de type métallique sous la forme d'un profilé ;
- la figure 5 est une vue schématisée d'un premier mode de réalisation des moyens de fixation et/ou de maintien des fils de palissage ;
- la figure 6 est une vue similaire à la précédente correspondant à un second mode de réalisation de ces moyens.

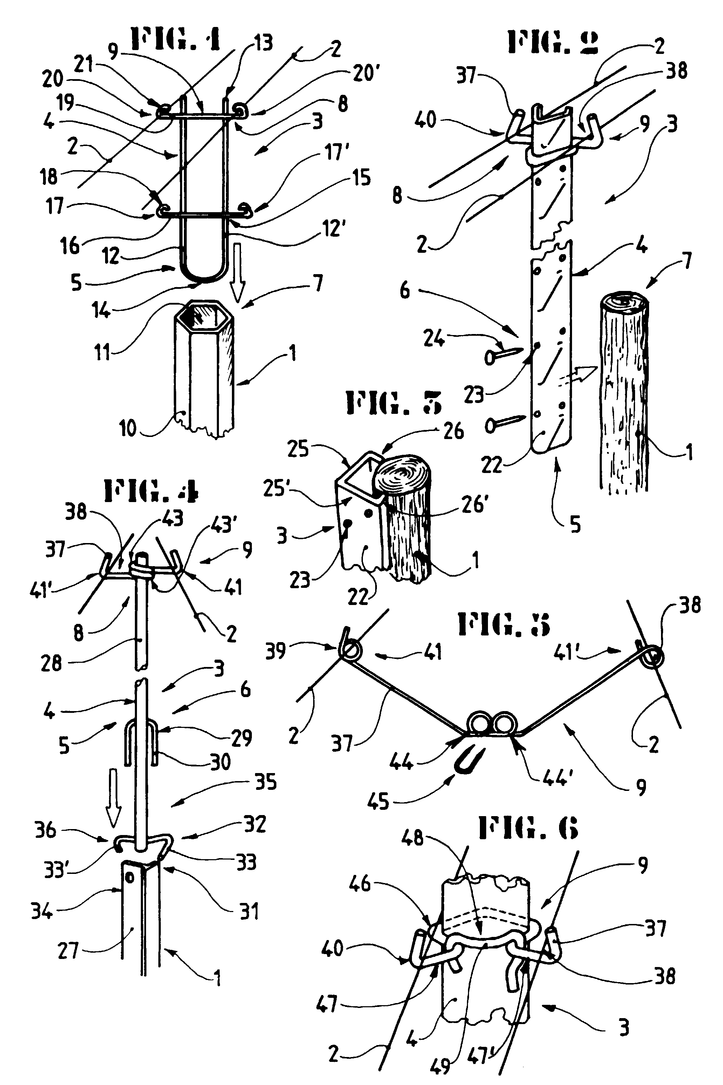

Tel que représenté dans les figures 1 à 6 du dessin ci-joint, la présente invention concerne le domaine vinicole et du travail de la vigne. Cette invention trouvera, plus particulièrement, son application lorsqu'il s'agit de procéder au relevage de la vigne afin d'augmenter la surface foliaire.

Une telle vigne se présente sous la forme de ceps de vigne enterrés, sensiblement dans le prolongement l'un de l'autre, de manière à former une rangée. A l'intérieur d'une telle rangée sont plantés, de loin en loin, des piquets de vigne 1 régulièrement espacés. Entre ces piquets 1 sont tendus, sensiblement de manière parallèle à la surface du sol, des fils de palissage 2, généralement constitués par des fils de fer.

Lors de la croissance de la vigne, les ceps développent des sarments à l'extrémité desquels poussent des feuilles définissant une surface foliaire. Ces sarments et ces feuilles sont amenés à pendre par-dessus lesdits fils de palissage 2 qu'il est avantageux de relever afin d'augmenter la surface foliaire, notamment pendant la croissance de la végétation et avant la maturation des grappes de raisin.

Dans ce but, l'invention concerne un dispositif prolongateur 3 d'un piquet 1 constitué par un corps allongé 4 comportant, dans sa partie inférieure 5, des moyens de fixation 6 en vue de le rendre solidaire de la partie supérieure 7 dudit piquet de vigne 1. Ce corps allongé 4 reçoit, en outre, notamment à son extrémité supérieure 8, des moyens de fixation et/ou de maintien 9 des fils de palissage 2.

On observera qu'un tel piquet de vigne 1 peut être constitué en des matériaux divers et se présenter sous différents aspects. Ainsi, comme représenté figures 1 et 4, un tel piquet 1 peut adopter la forme d'un profilé, par exemple, en matériau métallique. Ce piquet peut encore être en bois et présenter alors une section sensiblement circulaire tel qu'il a été représenté figures 2 et 3.

Aussi, le fait d'avoir affaire à des piquets de vigne 1 de formes aussi différentes conduit à conférer également au corps allongé 4 une forme adaptée afin de pouvoir les solidariser de manière appropriée.

Comme il a été représenté figure 1, un tel piquet 1 peut être constitué par un profilé 10, notamment de forme tubulaire, présentant une ouverture 11 dans sa partie supérieure 7. Selon un mode de réalisation préféré, le corps allongé 4 est conçu de manière à pouvoir être introduit à l'intérieur de ladite ouverture 11. A cet effet, ledit corps allongé 4 est, par exemple, composé de deux branches 12, 12' sensiblement parallèles et reliées entre elles. C'est précisément ces branches 12, 12' qui sont destinées à être emboîtées, par leur partie inférieure 5, dans le profilé 10 constituant le piquet de vigne 1, au travers de ladite ouverture 11.

Selon un mode préféré de réalisation, les deux branches 12, 12' du corps allongé 4 sont constituées par un même fil métallique 13 replié dans sa partie médiane 14.

On observera que, de manière à limiter la pénétration à l'intérieur du piquet 1 du corps allongé 4 et donc des branches 12, 12', l'une au moins de ces dernières comporte une butée d'arrêt 15.

Celle-ci se présente sous la forme d'un fil métallique 16, notamment de section inférieure à celle du fil 13. Ce fil 16 est disposé sensiblement perpendiculairement aux branches 12, 12' desquelles il est rendu solidaire, notamment par soudure. On observera que, de manière avantageuse, ce fil métallique 16 peut décrire, à l'une au moins de ses extrémités 17, 17', une boucle 18, un crochet ou analogue pour la fixation et/ou le maintien de fils de palissage 2.

Comme il a déjà été précisé plus haut, un tel corps allongé 4 reçoit, à son extrémité supérieure 8, des moyens de fixation et/ou de maintien 9 de fils de palissage 2. Dans le cas présent, ces moyens 9 sont constitués, tout comme précédemment, par un fil métallique 19 s'étendant perpendiculairement aux branches 12, 12' dont il est rendu solidaire grâce à des moyens appropriés, notamment par soudure. On observera, on outre, que ledit fil métallique 19 décrit, à l'une au moins de ses extrémités 20, 20', une boucle 21 pour la fixation et/ou le maintien de fils de palissage 2.

Il a été représenté figures 2 et 3 un dispositif prolongateur 3 d'un piquet de vigne 1, ce dernier étant en bois et présentant une section sensiblement circulaire. Selon un mode de réalisation particulièrement avantageux et bien adapté à un tel piquet 1, le corps allongé 4 est constitué par un profilé 22 adoptant une forme de cornière. Les moyens de fixation 6 destinés à rendre solidaire le corps allongé 4 du piquet de vigne 1 se présentent alors sous la forme d'au moins un orifice 23 ménagé dans la partie inférieure 5 dudit profilé 22. Un tel orifice 23 est destiné à permettre le passage d'organes de fixation 24, tels que des vis, clous ou analogues.

Comme il a été représenté figures 2 et 3, le profilé 22 en cornière comporte deux ailes 25, 25' formant un dièdre ouvert. Selon un mode de réalisation préféré, ces ailes 25, 25' peuvent présenter des bords 26, 26' repliés vers l'intérieur du profilé 22, sensiblement en direction l'un de l'autre, permettant avantageusement de contribuer à la rigidité de ce dernier. C'est précisément ces bords 26, 26' qui peuvent être à même de venir en applique le long dudit piquet de vigne 1, notamment selon des génératrices, tel qu'il a été représenté figure 3. Tel est notamment le cas lorsque la section de ce piquet de vigne 1 est sensiblement supérieure à l'écartement entre lesdits bords 26, 26'.

Selon un autre mode de réalisation représenté figure 4, ledit piquet de vigne 1 peut se présenter sous la forme d'un profilé 27, par exemple en métal, notamment un profilé de type ouvert en «T», en «L», en «I» ou autre. Un tel profilé 27 est destiné à recevoir un dispositif prolongateur 3 sous la forme d'un corps allongé 4 qui, selon un mode préféré de réalisation, est une tige 28. Quant aux moyens de fixation 6, situés dans la partie inférieure 5 d'un corps allongé 4 ainsi conçu, ils sont constitués par des moyens d'accrochage 29. Ceux-ci se présentent, avantageusement et tel qu'il a été représenté figure 4, comme une fourche 30 ou analogue venant s'emboîter sur l'extrémité supérieure 31 du piquet de vigne 1.

De tels moyens d'accrochage 29 peuvent encore être complétés par des moyens de stabilisation verticale 32 de la tige 28 par rapport au piquet 1. Ces moyens de stabilisation 32 se présentent, par exemple, sous la forme d'une ou plusieurs griffes 33, 33' susceptibles, chacune, de prendre appui contre et/ou de s'agripper à un des chants 34 dudit profilé 27. Ces griffes 33, 33' équipent la partie inférieure 35 d'un prolongement de la tige 28, au-delà des moyens d'accrochage 29.

Selon un autre mode de réalisation, de tels moyens de stabilisation verticale 32 peuvent adopter une conformation sensiblement en anneau pouvant être ouvert ou refermé, ledit anneau étant destiné à être enfilé par-dessus le piquet 1 afin de l'entourer. Ces moyens 32 peuvent encore ressembler à un ou plusieurs crochets dont l'un au moins est à même de coopérer avec un orifice aménagé dans le profilé 27 constituant le piquet de vigne 1.

On remarquera que lesdits moyens de stabilisation 32 peuvent, en outre, constituer des moyens de solidarisation 36 permettant de rendre solidaire cette tige 28 du piquet 1.

Selon l'invention, le dispositif prolongateur 3 constitué par un corps allongé 4 reçoit, en outre, notamment en son extrémité supérieure 8, des moyens de fixation et/ou de maintien 9 de fils de palissage 2. Tel qu'il a été représenté figures 2, 4, 5 et 6, ces moyens 9 peuvent se présenter sous la forme d'un fil métallique 37 définissant au moins un berceau 38 pour la réception d'un fil de palissage 2.

Selon un mode préféré de réalisation, un tel berceau 38 résulte de la conformation en boucle 39, en crochet 40 ou analogue de l'une au moins des extrémités 41, 41' dudit fil métallique 37, ce dernier étant, par ailleurs, rendu solidaire du corps allongé 4 par l'intermédiaire de moyens de raccordement 42.

Selon un premier mode de réalisation représenté figure 4, ces moyens de raccordement 42 se présentent sous la forme d'une ou plusieurs spires 43, 43' réalisées par déformation dudit fil métallique 37, ces spires 43, 43' étant destinées à venir se resserrer, notamment de manière élastique, sur le corps allongé 4 une fois emboîtées sur ce dernier.

Selon un second mode de réalisation représenté figure 5, lesdits moyens de raccordement 42 adoptent la forme d'une ou plusieurs boucles 44, 44' obtenues, par exemple, par déformation du fil métallique 37. Ces boucles 44, 44' sont destinées à la réception et/ou au passage d'un ou plusieurs organes de fixation 45 dudit fil 37 sur le corps allongé 4, un tel organe de fixation 45 étant constitué substantiellement par une vis, un clou ou analogue.

Finalement, comme représenté figures 2 et 6, lesdits moyens de raccordement 42 peuvent encore être définis par un fil métallique 37 conformé en forme de cavalier 46 destiné à être engagé sur le corps allongé 4. Un tel cavalier 46 comporte deux branches 47, 47', tandis que des moyens de resserrage 48 sont à même d'assurer le rapprochement de ces branches 47, 47' en vue d'enserrer ledit corps allongé 4. Ces moyens de resserrage 48 se présentent, par exemple, sous la forme d'une agrafe 49 destinée à chevaucher lesdites branches 47, 47' et mise en place sur ces dernières, notamment par clipage.

Ce dernier mode de réalisation a été représenté figures 2 et 6 et est appliqué, plus particulièrement, à un dispositif prolongateur 3 constitué par un profilé 22 en cornière. Cependant, considérant la conception particulièrement simple de tels moyens de fixation et/ou de maintien 9, il est évident que, moyennant une simple adaptation de la forme et des dimensions du cavalier 46, ils sont non seulement susceptibles d'équiper n'importe lequel des corps allongés 4 faisant l'objet de la présente invention, mais également n'importe lequel des piquets de vigne 1.

La conception particulièrement simple des moyens de raccordement 42, qu'il s'agisse de spires 43, 43' ou d'un cavalier 46, permet une mise en place aisée, rapide, précise, fiable et définitive des moyens de fixation et/ou de maintien 9. Une telle conception permet, en outre, de positionner avantageusement lesdits moyens de fixation et/ou de maintien 9 en un endroit quelconque le long du corps allongé 4. Ceci permet, par conséquent, d'amener les fils de palissage 2 à une hauteur quelconque par rapport au sol, notamment par simple coulissement des moyens de fixation et/ou de maintien 9 par rapport audit corps allongé 4.

Un autre avantage de la présente invention concerne, plus particulièrement et plus directement, ce corps allongé 4. En effet, ce dernier peut se présenter sous des formes diverses et variées lui permettant d'être adapté à n'importe quel type de piquet de vigne 1. En outre, la longueur de ce corps allongé 4 est modulable en fonction des besoins.

En conséquence, la présente invention apporte un progrès considérable dans le domaine considéré.

## Revendications

1. Dispositif prolongateur (3) d'un piquet de vigne (1) en vue d'augmenter la surface foliaire pendant la croissance de la végétation et avant la maturation des grappes de raisin, caractérisé par le fait qu'il est constitué par un corps allongé (4) comportant, dans sa partie inférieure (5), des moyens de fixation (6) en vue de le rendre solidaire de la partie supérieure (7) du piquet de vigne (1), ce corps allongé (4) recevant, en outre, notamment à son extrémité supérieure (8), des moyens de fixation et/ou de maintien (9) de fils de palissage (2).

2. Dispositif prolongateur (3) d'un piquet de vigne (1) sous la forme d'un profilé (10), notamment tubulaire, selon la revendication 1, caractérisé par le fait que le corps allongé (4) est composé de deux branches (12, 12') sensiblement parallèles et reliées entre elles, ces branches (12, 12') étant destinées à être emboîtées, par leur partie inférieure (5), dans ledit profilé (10), l'une au moins de ces branches (12, 12') comportant une butée d'arrêt (15) destinée à limiter leur pénétration à l'intérieur dudit profilé (10).

3. Dispositif prolongateur (3) d'un piquet de vigne (1) selon la revendication 2, caractérisé par le fait que les deux branches (12, 12') du corps allongé (4) sont constituées par un même fil métallique (13) replié dans sa partie médiane (14).

4. Dispositif prolongateur (3) d'un piquet de vigne (1) selon l'une quelconque des revendications 2 ou 3, caractérisé par le fait que ladite butée d'arrêt (15) se présente sous la forme d'un fil métallique (16) sensiblement perpendiculaire aux branches (12, 12') desquelles il est rendu solidaire, notamment par soudure, ce fil métallique (16) décrivant, à l'une au moins de ses extrémités (17, 17'), une boucle (18), un crochet ou analogue, pour la fixation et/ou le maintien de fils de palissage (2).

5. Dispositif prolongateur (3) d'un piquet de vigne (1) selon l'une quelconque des revendications 2 à 4, caractérisé par le fait que ledit corps allongé (4) reçoit, à son extrémité supérieure (8), des moyens de fixation et/ou de maintien (9) constitués par un fil métallique (19) s'étendant perpendiculairement aux branches (12, 12') dont ledit fil (19) est rendu solidaire, notamment par soudure, ce fil (19) décrivant, à l'une au moins de ses extrémités (20, 20'), une boucle (21) pour la fixation et/ou le maintien de fils de palissage (2).

6. Dispositif prolongateur (3) d'un piquet de vigne (1), notamment en bois, selon la revendication 1, caractérisé par le fait que le corps allongé (4) est constitué par un profilé (22) adoptant une forme de cornière, tandis que les moyens de fixation (6) se présentent sous la forme d'au moins un orifice (23) ménagé dans la partie inférieure (5) dudit profilé (22) pour le passage d'organes de fixation (24), tels que des vis, clous ou analogues.

7. Dispositif prolongateur (3) d'un piquet de vigne (1) selon la revendication 6, caractérisé par le fait que le profilé (22) en cornière comporte deux ailes (25, 25') dont les bords (26, 26') sont repliés vers l'intérieur dudit profilé (22), sensiblement en direction l'un de l'autre, lesdits bords (26, 26') pouvant être à même de venir en applique le long dudit piquet de vigne (1).

8. Dispositif prolongateur (3) d'un piquet de vigne (1) se présentant sous la forme d'un profilé (27), par exemple en métal, selon la revendication 1, caractérisé par le fait que ledit corps allongé (4) est une tige (28), tandis que les moyens de fixation (6), situés dans la partie inférieure (5) d'un corps allongé (4) ainsi conçu, sont constitués par des moyens d'accrochage (29) tels qu'une fourche (30) ou analogue venant s'emboîter sur l'extrémité supérieure (31) du piquet (1).

9. Dispositif prolongateur (3) d'un piquet de vigne (1) selon la revendication 8, caractérisé par le fait que les moyens d'accrochage (29) sont complétés par des moyens de stabilisation verticale (32) de la tige (28) par rapport au piquet (1), ces moyens de stabilisation (32) se présentant, par exemple, sous la forme d'une ou plusieurs griffes (33, 33') équipant la partie inférieure (35) d'un prolongement de la tige (28), au-delà des moyens d'accrochage (29).

10. Dispositif prolongateur (3) d'un piquet de vigne (1) selon l'une quelconque des revendications précédentes, caractérisé par le fait que lesdits moyens de fixation et/ou de maintien (9) de fils de palissage (2) se présentent sous la forme d'un fil métallique (37) définissant au moins un berceau (38) pour la réception d'un fil de palissage (2), ce fil métallique (37) étant rendu solidaire du corps allongé (4) par l'intermédiaire de moyens de raccordement (42).

11. Dispositif prolongateur (3) de piquet de vigne (1) selon la revendication 10, caractérisé par le fait que l'une au moins des extrémités (41, 41') du fil métallique (37) est conformée en boucle (39), crochet (40) ou analogue constituant substantiellement ledit berceau (38).

12. Dispositif prolongateur (3) de piquet de vigne (1) selon l'une quelconque des revendications 10 ou 11, caractérisé par le fait que lesdits moyens de raccordement (42) se présentent sous la forme d'une ou plusieurs spires (43, 43') réalisées par déformation du fil métallique (37) et destinées à venir se resserrer, notamment de manière élastique, sur le corps allongé (4) une fois emboîtées sur ce dernier.

13. Dispositif prolongateur (3) de piquet de vigne (1) selon l'une quelconque des revendications 10 ou 11, caractérisé par le fait que lesdits moyens de raccordement (42) adoptent la forme d'une ou plusieurs boucles (44, 44') destinées à la réception et/ou au passage d'un ou plusieurs organes de fixation (45) tels qu'une vis, un clou ou analogue.

14. Dispositif prolongateur (3) de piquet de vigne (1) selon l'une quelconque des revendications 10 ou 11, caractérisé par le fait que les moyens de raccordement (42) sont définis par un fil métallique (37) conformé en forme de cavalier (46) destiné à être engagé sur le corps allongé (4) et comportant deux branches (47, 47'), tandis que des moyens de resserrage (48) sont à même d'assurer le rapprochement de ces branches (47, 47') en vue d'enserrer ledit corps allongé (4).
